# EUROPEAN PATENT APPLICATION

(11) **EP 3 757 745 A1**
(43) Date of publication of application: **30.12.2020**
(21) Application number: 19191749.1
(22) Date of filing: 14.08.2019
(51) Int. Cl.: G06F 3/0488, G06F 3/0484

(54) **CONTROL METHOD, DISPLAY DEVICE AND STORAGE MEDIUM**

(30) Priority: 27.06.2019 CN 201910569718
(71) Applicant: Shenzhen Yingchuang Technology Co., Ltd., Baoan District, Shenzhen (CN)
(72) Inventor: Li, jie, Yingquan District, Fuyang, Anhui (CN)
(74) Representative: Viering, Jentschura & Partner mbB Patent- und Rechtsanwälte

(57) **Abstract**

A control method, device and storage medium applied to a display device with a touch function for implementing an OSD touch operation of a display device and avoiding the touch function not being recognized when an OSD menu is operated by a touch mode are provided. The control method includes: detecting an instruction for activating the OSD menu; when receiving the instruction, calling up the OSD menu, and turning off a function of a touch driver board for broadcasting a touch position to a first interface for connecting a signal source; and detecting the touch position; when the touch position is within a display area of the OSD menu, executing a menu option; and when the touch position is outside the display area, no longer displaying the OSD menu, and turning on a communication function of the touch driver board and the first interface.

## Description

### BACKGROUND

### 1. Technical Field

The present invention relates to a display device with a touch function, a control method, and a storage medium, which are mainly used to implement an OSD touch operation of a display device and avoid the attribution relationship of the touch function incapable of being recognized when an OSD menu is operated by a touch mode

### 2. Description of Related Art

OSD is the abbreviation of On Screen Display. It is applied to display devices such as CRT and LCD, and displays some special glyphs or graphics on the screen of the display device to let users get some information. It is commonly found on the display of a home TV or a personal computer that, when the user operates the TV to change channels or adjust the volume, picture quality, etc., the TV screen will display the current status for the user to know.

The combination of touch technology and display device constitutes a display device with a touch function, which can input information by touching the screen, so that the information input operation becomes very convenient. However, when the OSD menu is provided on the display device with touch function and connected to the signal source, the device cannot recognize whether the current touch function operates on the OSD menu or on the source, that is, the attribution relationship of the touch function is incapable of being recognized.

### SUMMARY

The first object of the present invention is to provide a control method for implementing an OSD touch operation of a display device and solving the technical problem of the attribution relationship of the touch function incapable of being recognized existing in the prior art.

The second object of the present invention is to provide a display device for implementing an OSD touch operation of a display device and solving the technical problem of the attribution relationship of the touch function incapable of being recognized existing in the prior art.

The third object of the present invention is to provide a storage medium for implementing an OSD touch operation of a display device and solving the technical problem of the attribution relationship of the touch function incapable of being recognized existing in the prior art.

In order to achieve the first object, the present invention provides a control method applied to a display device with a touch function for implementing an OSD touch operation of a display device and avoiding an attribution relationship of the touch function incapable of being recognized when an OSD menu is operated by a touch mode, wherein the control method comprises the following steps:
detecting an instruction for activating the OSD menu;
when receiving the instruction for activating the OSD menu, calling up the OSD menu, and turning off a function of a touch driver board for broadcasting a touch position to a first interface for connecting a signal source; and
detecting the touch position; when the touch position is within a display area of the OSD menu, executing a menu option corresponding to the current touch position; and when the touch position is outside the display area of the OSD menu, no longer displaying the OSD menu, and turning on a communication function of the touch driver board and the first interface.

Since the function of broadcasting the touch position to the first interface for connecting the signal source is turned off after the OSD menu is called up, the touch function belongs to the display device at this time. When the OSD menu is no longer displayed, the communication function of the touch driver board and the first interface is turned on, and the touch function belongs to the signal source at this time. The problem of being unable to recognize the attribution relationship of the touch function is effectively solved.

In the above control method, an input method of the instruction for activating the OSD menu is preferably a plurality of fingers simultaneously performing sliding of the same track on a screen, and the track is any kind of predetermined track.

In the above control method, the input method of the instruction for activating the OSD menu is preferably a finger making a predetermined track sliding on the screen.

In the above control method, the input method of the instruction for activating the OSD menu is preferably a physical button press on the display device.

In the above control method, the first interface is preferably a USB interface, and other interfaces capable of performing bidirectional data transmission may also be used.

For the second purpose, a display device provided by the present invention includes:
a display driver board having a display driving chip capable of outputting an OSD and a first interface for connecting a signal source;
a touch driver board, connected to the display driver board through a USB or an IIC bus and another serial bus respectively; wherein the display driver board is further configured to perform the following control:
detecting an instruction for activating an OSD menu;
when receiving the instruction for activating the OSD menu, calling up the OSD menu, and turning off a function of a touch driver board for broadcasting a touch position to a first interface for connecting a signal source; and
detecting the touch position; when the touch position is within a display area of the OSD menu, executing a menu option corresponding to the current touch position; and when the touch position is outside the display area of the OSD menu, no longer displaying the OSD menu, and turning on a communication function of the touch driver board and the first interface.

In the above display device, the first interface is preferably a USB interface, and other interfaces capable of performing bidirectional data transmission may also be used. Preferably, the display device further includes one or more of a video graphics array (VGA), a digital video interface (DVI), a high definition multimedia interface (HDMI), a DP interface (DisplayPort), and the TYPE-C interface.

In the above display device, preferably, the another serial bus is an IIC bus or a UART bus.

For a third object, the present invention provides a storage medium readable by a computer and having a program for causing a device to execute the control method according to any of the above.

Compared with the prior art, the present invention has at least the following beneficial effects. Since the attribution relationship of the touch function can be recognized, the OSD menu of the display device can be operated by touch on the screen of the display device, and the signal source connected thereto can be operated.

### BRIEF DESCRIPTION OF THE DRAWINGS

FIG. 1 is a flow chart of the control method of the present invention.
FIG. 2 is a block diagram of a circuit of a display device.
FIG. 3 is a schematic diagram of an application of a display device connected to a signal source.

### DESCRIPTION OF THE EXEMPLARY EMBODIMENTS

The invention will be further described below in conjunction with the drawings and embodiments.

The control method is applied to a display device with a touch function for implementing an OSD touch operation of the display device and avoiding the attribution relationship of the touch function incapable of being recognized when the OSD menu is operated by a touch method.

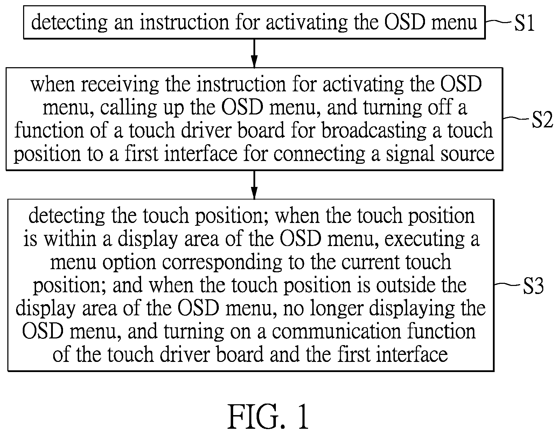

Referring to FIG. 1, the control method includes the following steps.

Step 1: detecting an instruction for activating an OSD menu.

The method by which the user gives the instruction, that is, an input method of the instruction, can be divided into two types: one is a touch method, and the other is using a button on the display driver board.

The touch mode may adopt a multi-finger touch method, that is, multiple fingers simultaneously slide on the same track on the screen, such as two-finger-up-sliding, two-finger-down-sliding, three-finger-up-sliding, etc., and the track may be any one of predetermined track.

The touch mode can also be a one-finger touch mode, that is, one finger makes a predetermined track slide on the screen. The track here can be any kind of predetermined track, and only needs to be unique.

Step 2: when receiving the instruction for activating the OSD menu, calling up the OSD menu, and turning off a function of a touch driver board for broadcasting a touch position to a first interface for connecting a signal source.

The first interface may be any interface capable of performing bidirectional data transmission, preferably a USB interface, and more preferably a USB TYPE-C interface.

Step 3: detecting the touch position; when the touch position is within a display area of the OSD menu, executing a menu option corresponding to the current touch position; and when the touch position is outside the display area of the OSD menu, no longer displaying the OSD menu, and turning on a communication function of the touch driver board and the first interface.

In the above control method, since the function of broadcasting the touch position to the first interface for connecting the signal source is turned off after the OSD menu is called up, the touch function belongs to the display device at this time. When the OSD menu is no longer displayed, the communication function of the touch driver board and the first interface is turned on, and the touch function belongs to the signal source at this time. The control method can effectively recognize the attribution relationship of the touch function, thereby enabling the OSD menu of the display device to be operated by touch on the screen of the display device, and operating the signal source connected thereto.

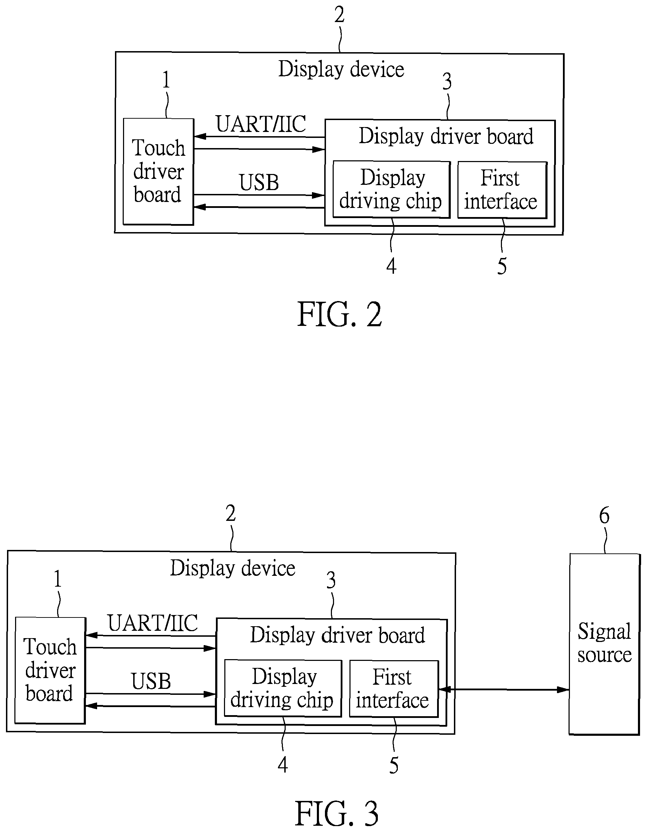

Referring to FIG. 2, a display device 2 of the embodiment includes a display driver board 3 and a touch driver board 1.

The display driver board 3 has a display driving chip (capable of inputting OSD) 4 and a first interface 5 for connecting a signal source. The touch driver boar 1 is connected to the display driver board 3 via a USB bus and another serial bus, respectively. The first interface is preferably a USB interface, and other interfaces capable of performing bidirectional data transmission may be used. The another serial bus is preferably an IIC bus or a UART bus.

The display driving chip 4 is further configured to control: detecting an instruction for activating the OSD menu; when receiving the instruction for activating the OSD menu, calling up the OSD menu, and turning off a function of a touch driver board for broadcasting a touch position to a first interface for connecting a signal source; and detecting the touch position; when the touch position is within a display area of the OSD menu, executing a menu option corresponding to the current touch position; and when the touch position is outside the display area of the OSD menu, no longer displaying the OSD menu, and turning on a communication function of the touch driver board and the first interface.

In order to enable the display device 2 to adapt to the signal source of different display interfaces, one or more of a video graphics array (VGA), a digital video interface (DVI), a High Definition Multimedia Interface (HDMI), a DP interface (DisplayPort), and a TYPE-C interface may be further disposed on the display driver board 3.

As shown in FIG. 3, when in use, a signal source 6 is connected to the display device 2 via the first interface 5. The signal source 6 can be a smartphone, a desktop computer or a laptop computer.

Before the OSD menu is called up, the touch function belongs to the signal source 6, that is, when touching on the screen of the display device 2, the content item of the operation is the content of the signal source 6.

When the user gives the instruction for activating the OSD menu on the display device 2, for example, the two-finger-up-sliding action is made on the screen of the display device 2, (here, it is assumed that the touch of the two-finger up-sliding corresponds to the activated OSD menu), the touch driver board 1 uses the UART bus or the IIC bus to send the instruction for activating the OSD menu to the display driver board 3 to call up the OSD menu, and at the same time, the function of the USB of the touch driver board 1 broadcasting coordinate is turned off. That is, the function of the touch driver board 1 to broadcast the touch position to the first interface 5 is turned off. At the time, the touch function belongs to the display device 2, and the touch driver board 1 and the display driver board 3 are in communication with each other through the UART bus or the IIC bus. When touching is within a display area of the OSD menu, a menu option corresponding to the OSD menu is executed. When touching is outside the display area of the OSD menu, the OSD menu disappears, and at the same time, the communication function of the USB is turned on; that is, the communication function of the touch driver board and the first interface is turned on.

A storage medium readable by a computer and having a program for causing a device to execute the above-described control method is provided by the present invention.

The present invention has been described in detail with reference to the preferred embodiments thereof, and the detailed description is not to be construed as limiting the scope of the invention. Various refinements, equivalent transformations, and the like performed by the above-described embodiments under the present invention should be included in the scope of the present invention.

## Claims

1. A control method applied to a display device with a touch function for implementing an OSD touch operation of a display device and avoiding an attribution relationship of the touch function incapable of being recognized when an OSD menu is operated by a touch mode, wherein the control method comprises the following steps:
detecting an instruction for activating the OSD menu;
when receiving the instruction for activating the OSD menu, calling up the OSD menu, and turning off a function of a touch driver board for broadcasting a touch position to a first interface for connecting a signal source; and
detecting the touch position; when the touch position is within a display area of the OSD menu, executing a menu option corresponding to the current touch position; and when the touch position is outside the display area of the OSD menu, no longer displaying the OSD menu, and turning on a communication function of the touch driver board and the first interface.

2. The control method according to claim 1, wherein an input method of the instruction for activating the OSD menu is a plurality of fingers simultaneously performing sliding of the same track on a screen, and the track is any kind of predetermined track.

3. The control method according to claim 1, wherein the input method of the instruction for activating the OSD menu is a finger making a predetermined track sliding on the screen.

4. The control method according to claim 1, wherein the input method of the instruction for activating the OSD menu is a physical button press on the display device.

5. The control method according to claim 1, wherein the first interface is a USB or an IIC interface.

6. A display device, comprising:
a display driver board having a display driving chip capable of outputting an OSD and a first interface for connecting a signal source;
a touch driver board, connected to the display driver board through a USB or an IIC bus and another serial bus respectively; wherein the display driver board is further configured to perform the following control:
detecting an instruction for activating an OSD menu;
when receiving the instruction for activating the OSD menu, calling up the OSD menu, and turning off a function of a touch driver board for broadcasting a touch position to a first interface for connecting a signal source; and
detecting the touch position; when the touch position is within a display area of the OSD menu, executing a menu option corresponding to the current touch position; and when the touch position is outside the display area of the OSD menu, no longer displaying the OSD menu, and turning on a communication function of the touch driver board and the first interface.

7. The display device of claim 6, wherein the first interface is a USB interface.

8. The display device according to claim 6, wherein the another serial bus is an IIC bus or a UART bus.

9. A storage medium readable by a computer and having a program for causing a device to execute the control method according to claim 1.

10. A storage medium readable by a computer and having a program for causing a device to execute the control method according to claim 2.

11. A storage medium readable by a computer and having a program for causing a device to execute the control method according to claim 3.

12. A storage medium readable by a computer and having a program for causing a device to execute the control method according to claim 4.

13. A storage medium readable by a computer and having a program for causing a device to execute the control method according to claim 5.
